# EUROPEAN PATENT APPLICATION

(11) **EP 1 698 986 A2**
(43) Date of publication of application: **06.09.2006**
(21) Application number: 06100606.0
(22) Date of filing: 19.01.2006
(51) Int. Cl.: G06F 17/30

(54) **Creation and composition of sets items**

(30) Priority: 25.02.2005 US 656516 P; 27.07.2005 US 191125
(71) Applicant: MICROSOFT CORPORATION, Redmond, WA 98052 (US)
(72) Inventor: DeNeui, Alexander W., 98052, Redmond (US); Truong, Anh Tuan, 98052, Redmond (US); Pearce, Douglas R., 98052, Redmond (US); Seshadri, Praveen, 98052, Redmond (US); Williams, Shane F., 98052, Redmond (US); Mehrotra, Shishir, 98052, Redmond (US); Demar, Steven D., 98052, Redmond (US)
(74) Representative: Grünecker, Kinkeldey, Stockmair & Schwanhäusser Anwaltssozietät

(57) **Abstract**

A data organization system comprises an interface component that receives input that relates to properties associated with a first item type. A set generator component filters a collection of items of the first item type as a function of select properties associated with the input and creates and stores a first filtered set of items of the first item type. The first filtered set of items can, for example, be stored as one of a dynamic set and a static set.

## Description

### REFERENCE TO RELATED APPLICATIONS

This application claims the benefit of U.S. Provisional Application Serial No. 60/656,516 filed on February 25, 2005, and entitled SYSTEM AND METHOD FOR CREATION AND COMPOSITION OF SETS OF ITEMS, the entirety of which is incorporated herein by reference.

### BACKGROUND

Advancements in computer-related technology have enabled massive amounts of data to be provided by users and/or computer components with respect to an application, received by one or more applications, and stored for later retrieval and/or analysis. Due to amounts of data that can stored on consumer-level computing devices, such as desktop computers, laptop computers, personal digital assistants (PDAs), cellular phones, and the like, organizing such data in a user-friendly manner has become an extremely important task.

Conventionally, applications have difficulty with sharing data, and thus it is difficult if not impossible to effectively organize and filter data associated with different applications and/or different data types. For example, computers can include two disparate applications for playing entertainment media, such as video, music, *etc.* A user can rate media with respect to a first application and desire that such rating information be transferred to a second application. However, as stated above, data typically cannot be shared across applications, forcing a user to enter information into both applications.

Even when referring to single applications, various deficiencies exist in conventional systems in connection with organizing and presenting data associated with the application to a user. For example, most applications are not customizable for a user with respect to data desirably viewed. Therefore, rules exist in connection with organizing data for user display, and a user is forced to adapt to the rules of the application rather than the application adapting to how a user wishes to view data. For instance, email applications will allow a user to create a search folder based upon a query. The query can relate to text within a message, name of a sender of the message, and the like. Once a user exits the search window, however, results associated with the query are lost. Furthermore, as described above, customization of a viewing of data is not possible. In a specific example, an email application can show a user email messages as a function of time (e.g., dates the email messages were delivered and/or received). For instance, email applications can show a user email messages delivered in a past month, a past week, *etc.* The user, however, cannot customize a timeframe, and also cannot save a query for later retrieval.

Limitations of data organization do not solely relate to email applications. Photo viewing applications, entertainment media applications, and any other suitable applications are associated with similar deficiencies with respect to searching and organizing data in accordance with user desires. Moreover, conventional searching technology is static - a user cannot create a query that dynamically updates as conditions change. Thus, even if altered conditions arise that would change results of a query, the changes are not presented to the user.

### SUMMARY

The following presents a simplified summary in order to provide a basic understanding of some aspects of the claimed subject matter. This summary is not an extensive overview, and is not intended to identify key/critical elements of the claimed subject or to delineate the scope thereof. Its sole purpose is to present some concepts in a simplified form as a prelude to the more detailed description that is presented later.

The claimed subject matter relates generally to organization of data. More specifically, in accordance with one aspect described herein items can be organized by types associated with such items, and further organized by properties related to the types. For example, items can be filtered according to selected properties, thereby creating sets of items. Thereafter these sets of items can be saved by a user for later usage and convenient review of items. Thus, a user can customize how items are organized and stored, rather than being forced to adapt to a manner in which applications organize and store items of data. The created sets of items can be stored as a dynamic set or a static set. More specifically, a dynamic set of items can be populated as time passes and items meeting specified criteria are received. For instance, a set of email items can be created, wherein the set includes emails from specified individuals and the subject of the emails includes specified text. If the set of items is saved as a dynamic set, as emails are received that meet the aforementioned criteria, such emails will be added to the created set of items. If the set of items is saved as a static set, then such set will not alter over time.

Thus, one or more aspects of the claimed subject matter relate to creating sets to organize items of data. An extension to this concept relates to utilizing sets in connection with creating new sets. For instance, continuing with the above example, a set can be created that includes email sent from particular persons wherein the subject of the email comprises specified text. Such set can thereafter be utilized on email items to create related or more granular sets of email items. For example, to generate a more granular set, a user can further filter the above-described set by selecting additional properties with which to filter the set. In particular, the user can specify that a new set be created that is based upon the existent set, except that emails should be received within a specified time range. Thus, the new set of email items would be more granular than the previous set, and such new set can be saved as a dynamic or static set. To create a related set of email items, properties of a selected set can be utilized to filter against a collection of email items. For instance, a set of email items can be created as a function of subject line content and sender-however, all emails are associated with a particular time. A time range of the emails can thereafter be utilized to create a related set.

In another example, one or more existent sets of items, which are associated with a first item type, can be utilized to generate additional sets of items that are associated with a disparate but related item type. For instance, an email item and a contact item can be related, as an identity of a contact and an identity of a sender of email can have some form of relation therebetween. An aspect of the claimed subject matter enables sets to be created by way of relations between disparate item types. For a specific example, a set of contact items can be created that includes a specified grouping of contacts. This set can then be applied to a collection of image items, wherein a user can provide input indicating that a set of images is to be created where individuals captured within the images are within the set of contact items. Thus, a new set (e.g., images including individuals within the set of contacts) can be created.

To the accomplishment of the foregoing and related ends, certain illustrative aspects are described herein in connection with the following description and the annexed drawings. These aspects are indicative of various ways in which the claimed subject matter may be practiced, all of which are intended to be covered by the claimed subject matter. Other advantages and novel features may become apparent from the following detailed description when considered in conjunction with the drawings.

### BRIEF DESCRIPTION OF THE DRAWINGS

Fig. 1 is a high-level block diagram of a system that facilitates organization of data into sets of items.

Fig. 2 is a block diagram of a system that facilitates utilization of existent sets of items to create a new set of items.

Fig. 3 is a block diagram of a system that facilitates generation of sets of items and display thereof.

Fig. 4 is a block diagram of a system that facilitates searching over a collection of items in connection with generating a set.

Fig. 5 is a representative flow diagram illustrating a methodology for providing information that can be utilized in connection with generating a set.

Fig. 6 is a representative flow diagram illustrating a methodology for generating a set of items of a first item type as a function of a set of items of a second, related item type.

Fig. 7 is a representative flow diagram illustrating a methodology for generating a set of items.

Fig. 8 is a representative flow diagram illustrating a methodology for generating a set of items of a first item type as a function of a set of items of a second, related item type.

Fig. 9 is a representative flow diagram illustrating a methodology for creating a set of items by way of a search.

Fig. 10 is an exemplary user interface that can be employed in connection with viewing and creating sets of items.

Fig. 11 illustrates a relationship that can exist between items of disparate types.

Fig. 12 is a screenshot of an exemplary user interface that can be utilized in connection with viewing and creating sets of items.

Fig. 13 is a screenshot of an exemplary user interface that illustrates selection of properties in connection with creating a set of items.

Fig. 14 is a screenshot of a user interface that can be utilized to save a set of items.

Fig. 15 is a screenshot of a user interface depicting display of items upon selection of a set.

Fig. 16 is a screenshot of a user interface that depicts creation of a set of items by way of filtering with a pre-existent set of items.

Fig. 17 is a screenshot of a user interface that can be employed to select a manner in which to save a set of items.

Fig. 18 is a screenshot of a user interface that depicts display of items and properties associated with a second item type.

Fig. 19 is a screenshot of a user interface that depicts display of items when two disparate sets are concurrently selected.

Fig. 20 is a screenshot of a user interface that depicts an ability to utilize a set of items of a first type to create a set of items of a second type.

Fig. 21 is a schematic block diagram illustrating a suitable operating environment in accordance with an aspect of the present invention.

Fig. 22 is a schematic block diagram of a sample-computing environment with which the present invention can interact.

### DETAILED DESCRIPTION

The claimed subject matter is now described with reference to the annexed drawings, wherein like numerals refer to like or corresponding elements throughout. It should be understood, however, that the drawings and detailed description thereto are not intended to limit the claimed subject to the particular form disclosed. Rather, the intention is to cover all modifications, equivalents, and alternatives falling within the spirit and scope of the claimed subject matter.

As used in this application, the terms "component" and "system" and the like are intended to refer to a computer-related entity, either hardware, a combination of hardware and software, software, or software in execution. For example, a component may be, but is not limited to being, a process running on a processor, a processor, an object, an instance, an executable, a thread of execution, a program, and/or a computer. By way of illustration, both an application running on a computer and the computer can be a component. One or more components may reside within a process and/or thread of execution and a component may be localized on one computer and/or distributed between two or more computers.

The word "exemplary" is used herein to mean serving as an example, instance, or illustration. Any aspect or design described herein as "exemplary" is not necessarily to be construed as preferred or advantageous over other aspects or designs.

Artificial intelligence based systems (e.g., explicitly and/or implicitly trained classifiers) can be employed in connection with performing inference and/or probabilistic determinations and/or statistical-based determinations as in accordance with one or more aspects of the claimed subject matter as described hereinafter. As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. Various classification schemes and/or systems (e.g., support vector machines, neural networks, expert systems, Bayesian belief networks, fuzzy logic, data fusion engines ...) can be employed in connection with performing automatic and/or inferred action.

Furthermore, the claimed subject matter may be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, carrier, or media. For example, computer readable media can include but are not limited to magnetic storage devices *(e.g.,* hard disk, floppy disk, magnetic strips...), optical disks (e.g., compact disk (CD), digital versatile disk (DVD)...), smart cards, and flash memory devices *(e.g.,* card, stick, key drive...). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope or spirit of the claimed subject matter.

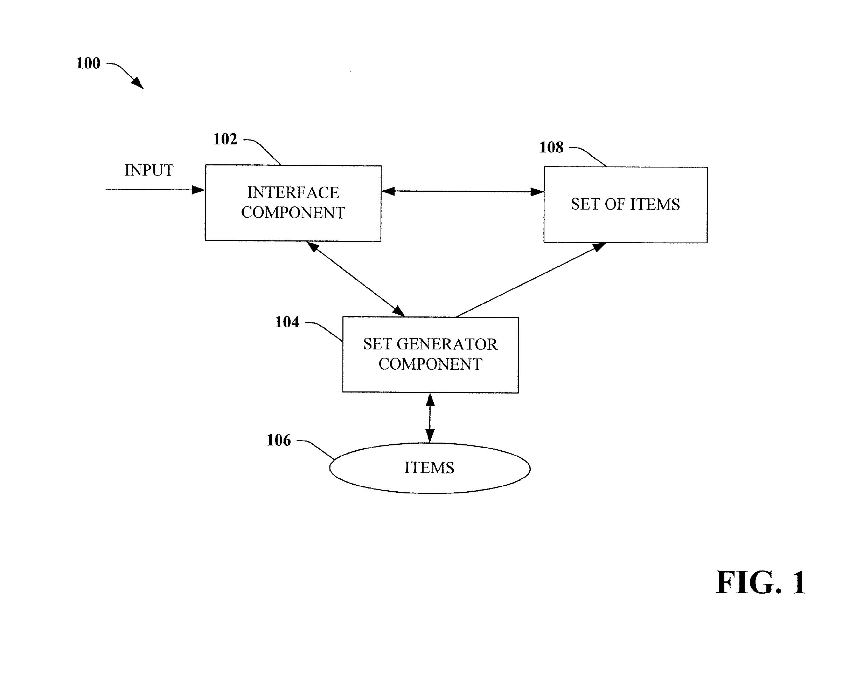

Turning initially to Fig. 1, a system 100 that facilitates filtering and organizing data is illustrated. The system 100 includes an interface component 102 that receives input relating to filtering items and/or creating sets of items. The input can be initiated from a user and/or automatically provided to the interface component 102 by way of one or more computer components. Accordingly, the interface component 102 can be (or be related to) a graphical user interface (GUI), a keyboard, a pointing and clicking mechanism, a pressure-sensitive screen, and/or any other suitable interface. The input or a translation thereof can be received by a set generator component 104, which generates a set of items (which can be static or dynamic) in accordance with the input. For example, the input can relate to a type of item with respect to which a set is to be created, selected properties utilized in connection with filtering items, selected sets employed for filtering items, and the like. To provide context with respect to the interface component 102 and the set generator component 104, a specific example is provided herein. It is understood that the following example is merely intended to assist in describing one specific use of an aspect of the claimed subject matter, and is not intended to limit the subject invention to any particular context.

The interface component 102 can be a graphical user interface that includes fields relating to a type of items (e.g., email items, contact items, photo items, ...). Thus, a user can, through the interface component 102, indicate that it is desirable to view and/or filter email items 106 *(e.g.,* email messages). The interface component 102 can then display all email items 106 to the user, and can further display properties associated with the email items 106 *(e.g.,* sender, subject, time received, ...). The user can select a property by which to filter the items 106 - for instance, the items 106 can be filtered by one or more senders. Thus, the user will be presented with email items that were delivered by selected sender(s). The interface component 102 can facilitate reception/obtainment of this information, and relay it to the set generator component 104. Thereafter, the user can save the collection of email items filtered by sender as a set of items 108, wherein the set of items 108 can be a static set or a dynamic set, and the set generator component 104 can facilitate generation of such set of items 108. If the set of items 108 is saved as a static set, then such set of items 108 will only include email items sent by the selected senders located at time of creation of the set of items 108, and content of the set of items 108 will not alter over time. If the set of items 108 is saved as a dynamic set, then content of the set of items 108 will alter as email items are received from the selected sender(s).

The created set of items 108 can then be accessed by way of the interface component 102. Furthermore, the set of items 108 can be employed in connection with further filtering the items 106, wherein the items 106 can be associated with a type that is substantially similar to a type of items within the set of items 108 and/or a type that is related to but disparate from a type of items within the set of items 108. In a particular example, content of the set of items 108 can include email items from one or more specified senders. A user can select the set of items 108 through the interface component 102 and apply to set of items 108 against the items 106 by way of the set generator component 104 to generate a new set (e.g., the set of items 108 can be utilized to filter the items 106). Continuing with the above example, the items 106 can include items that are of a type relating to photo images, and can include properties that indicate an individual or individuals within the images. The set of items 108 can be applied to the items 106 in such a way that a set of photographs is created, wherein the set includes photos of individuals who sent emails within the set of items 108. It can thus be seen from the foregoing that sets of items can be created, stored, maintained, and utilized to filter items of a similar type or different type to generate additional sets of items, thereby enabling a user to very granularly organize data.

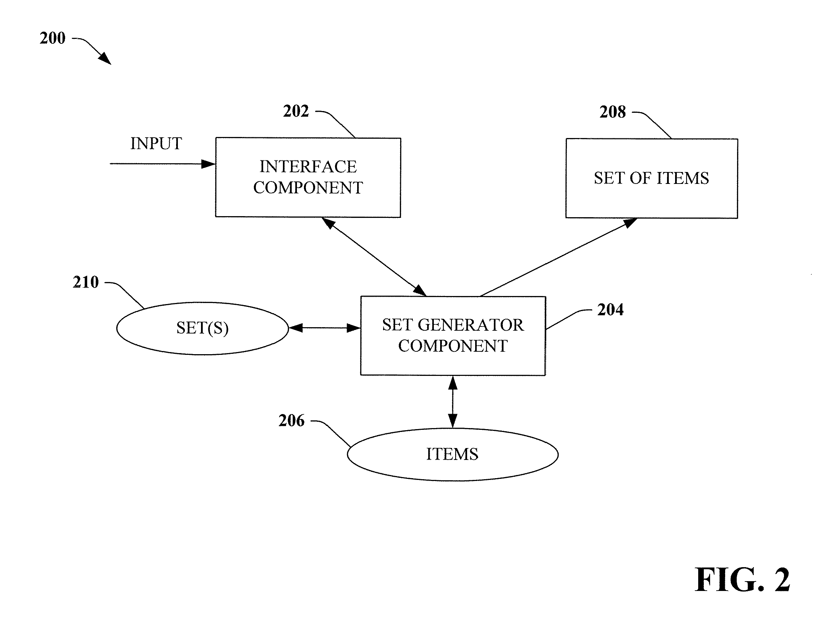

Now turning to Fig. 2, a system 200 that facilitates organization of various types of data items is illustrated. The system 200 includes an interface component 202 that receives input relating to organization of data. In particular, the input can be associated with creating one or more sets of items that can be stored and utilized by a user to organize data. A set generator component 204 can receive the input and analyze items 206 in accordance with the input. As an example, a user can inform the interface component 202 that a set of image-typed items is desirably created, and the interface component 202 can provide the user with items of the specified type. The user can also be provided with properties associated with the items, such as time of creation of items, identities of individuals who generated the items, identities of individuals or entities within the items, *etc*. The user can thereafter filter the items 206 as a function of selected properties associated therewith. In particular, the user can cause the set generator component 204 to create a set items 208 (e.g., image items) that were created by specified person(s) and were created in a particular time range. The set generator component 204 can save the set of items as a static set or a dynamic set, wherein a static set does not change over time and a dynamic set is automatically updated. In one example, a set can be created within an email application, and the set can be saved as a dynamic set. Thereafter, the application can be configured to add items to the set when particular conditions are met (e.g., when received email items are associated with properties that correspond to the set). Thus, email can be automatically directed to particular locations through utilization of the system 200. Photograph items, music items, video items, and any other suitable items can also be dynamically organized through utilization of sets created by way of the system 200.

In another example, the set generator component 204 can utilize one or more existent sets 210 in connection with generating the set of items 208. For example, the sets 210 can be employed to create additional sets of items that have a type substantially similar to a type of item within such sets 210. More specifically, the sets 210 can include email items, and the set of items 208 can desirably include more granular restrictions while also including email items. Thus, the sets 210 can include at least one set that comprises email items that were sent by a particular person. The interface component 202 can be employed to select such set, and items within the set can be provided to a user together with properties associated therewith. The user can thereafter desire to further filter the items by creating a new set, wherein the items were not only delivered by the particular person but also include at least some commonality in the subject of the email items. This new, more granular set can thereafter be created and saved as a dynamic set or a static set.

Moreover, the sets 210 can include items of a type that are disparate from a type of item within the desirably created set of items 208. In one example, a user may desire to create the set of items 208 in a manner so that such set of items 208 comprises items of a type associated with images. The sets 210 can include items that are of a type disparate but related to images, such as contacts (e.g., email contacts, instant messenger contacts, ...). The user can then indicate that the set of items 208 should include photographs (from the items 206) that include images of individuals that are contained within the sets 210. The set of items 208 can then be saved and stored in a manner desired by the user (e.g., as a static or dynamic set). It is thus understood that the sets 210 can be employed in connection with creating sets of items of a substantially similar type as well as creating sets of items of disparate but related types.

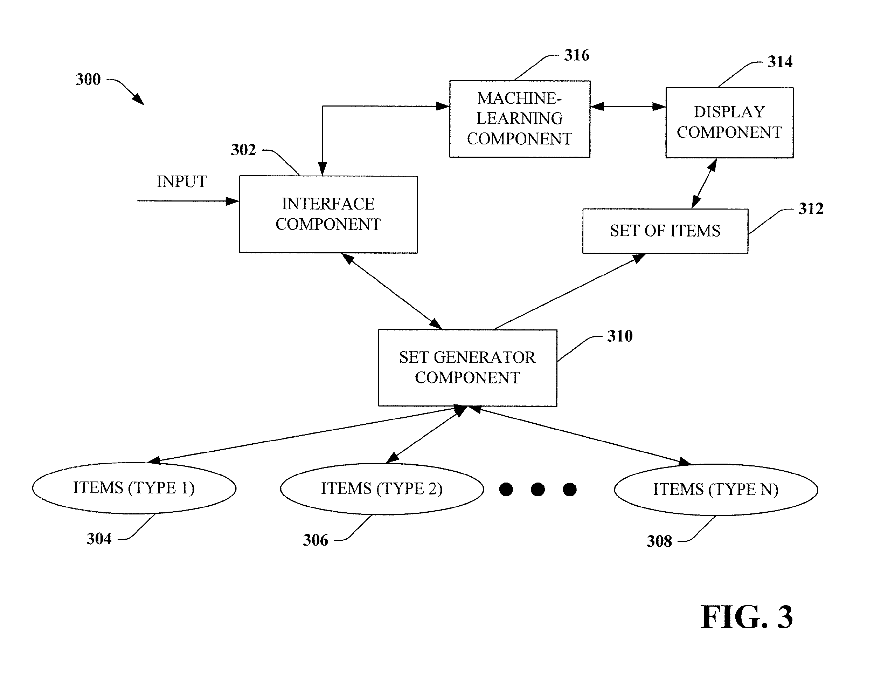

Now referring to Fig. 3, a system 300 that facilitates organization and display of data is illustrated. The system 300 includes an interface component 302 that receives input from a user, a computer component, or a combination thereof. The input received by the interface component 302 can relate to types of items to be organized, items to be organized, properties associated with the items on which an organization of the items is based, *etc.* For example, the input can relate to collections of items 304-308, wherein each of the collections of items 304-308 is associated with a disparate type. For instance, the collection of items 304 can include items of a type relating to email, the collection of items 306 can include items of a type relating to contacts, the collection of items 308 can include items of a type relating to digital images, and so forth. In another example, the input can be a query, wherein conventional algorithms are utilized to return results of such query.

The interface component 302 can be communicatively coupled to a set generator component 310, which analyzes one or more collections of items 304-308 that were specified within the received input. As a function of the input, the set generator component 310 can create at least one set of items 312, wherein the set of items 312 represents organization of items of particular types as desired by a user. As described above, the set of items 312 can be generated by utilizing properties associated with one or more of the collections of items 304-308, and/or by utilizing disparate sets of items (e.g., where the items are associated with a substantially similar type or a disparate but related type) to filter against one or more of the collections of items 304-308. The set of items 312 can be saved as a dynamic set or a static set, depending on user wishes.

The system 300 further includes a display component 314 that determines a manner in which to display the set of items 312, items within the set of items 312, sets related to the set of items 312, and the like. For example, the display component 314 can display sets of items in a hierarchical manner, thereby enabling a user to quickly traverse through sets logically. Moreover, sets associated with items of disparate types can be displayed in a manner that illustrates relation between such sets, if any. The display component 314 and the interface component 302 can be associated with a machine-learning component 316, which assists in displaying and creating sets by generating inferences relating to display and creation of sets and communicating the inferences to the interface component 302 and the display component 314, respectively. For example, items within sets can be displayed by the display component 314 as a function of context (e.g., at particular times a day a user may wish to view items in a set delivered by particular senders). Moreover, the machine-learning component 316 can assist in ordering items within a set, manner of display of items and/or sets, ordering items upon the interface component 302 receiving a query, *etc.*

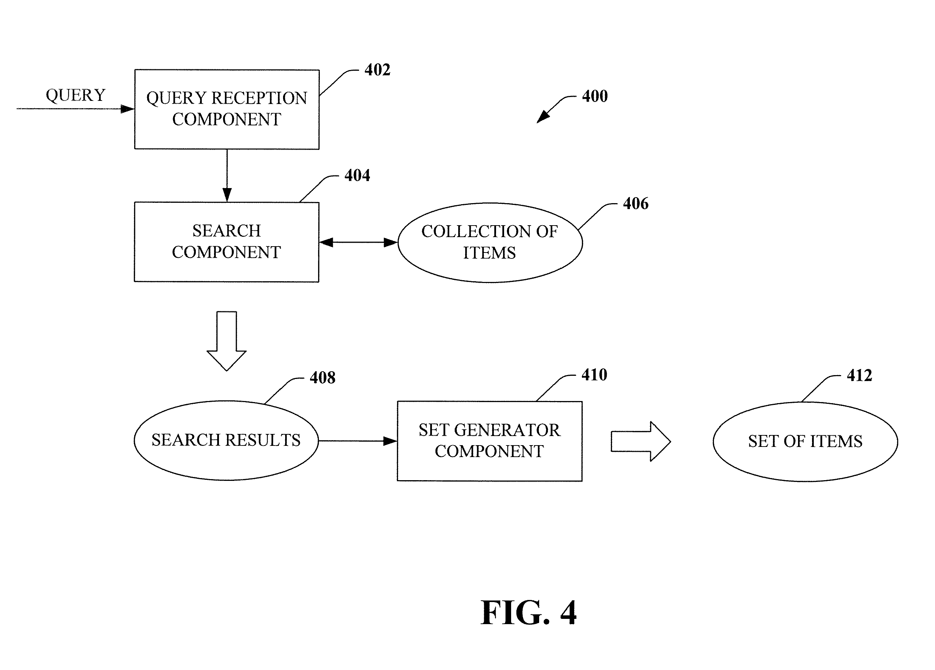

Now turning to Fig. 4, a system 400 that facilitates creation of a set of items is illustrated. The system 400 includes a query reception component 402 that receives a user query. The query reception component 402 is communicatively coupled to a search component 404 that utilizes the query to search over a collection of items 406. For example, the collection of items 406 can include email messages utilized in an email application, web pages, photograph files, music files, any other suitable items of particular type, or a combination of items of disparate types. The search component 404 obtains search results 408 by way of the query, and such results are delivered to a set generator component 410. The set generator component 410 can be employed to create a set of items 412 that includes the search results 408, wherein the set is accessible to a user at a later time without having to re-execute the query.

In one exemplary utilization of the system 400, such system 400 can be employed in connection with an email application. The email application can include a plurality of email messages over which a query can be executed (e.g., the collection of items 406). A query can be provided to the email application, and the search component 404 can retrieve email messages that correspond to the query. Results of the query can then be provided to a user, who can quickly create a set that includes the email messages returned during the search. Furthermore, the set of items can be categorized as dynamic, thereby causing email messages that are received/created at later times to be automatically included within the set if they correspond to the query. In contrast, conventional email applications require substantial manual commands to create specialized email folders.

In another exemplary utilization of the system 400, the collection of items 406 can be web pages on the Internet. The query reception component 402 can receive a query, and the search component 404 can locate web pages based upon the received query. A threshold number of pages can then be saved as a set by the set generator component 410 if desired by a user. In another example, a user can select pages from the search results and thereafter enter a command to save the selected pages as a set. Again, the set can be defined as static or dynamic. In a static example, contents of the set can be maintained, while content of the web pages within the set can be updated. In a disparate example, contents of the set and content of each individual web page can be maintained. Thus, if a user accesses the set at a later point in time, the web pages as they appeared can be provided to the user. Furthermore, the set can be dynamic, thereby enabling other web pages that correspond to the query to be provided to the set of items. For instance, content of web pages within the set can be analyzed, and a measure of correspondence can be created between the web pages in the set and other web pages corresponding to the query. If the measure of correspondence is above a threshold, the web pages corresponding to the query can be automatically added to the set of items 412. Thus, it can be discerned that items of any suitable type can be searched over, and the results of the search can be saved as static or dynamic sets.

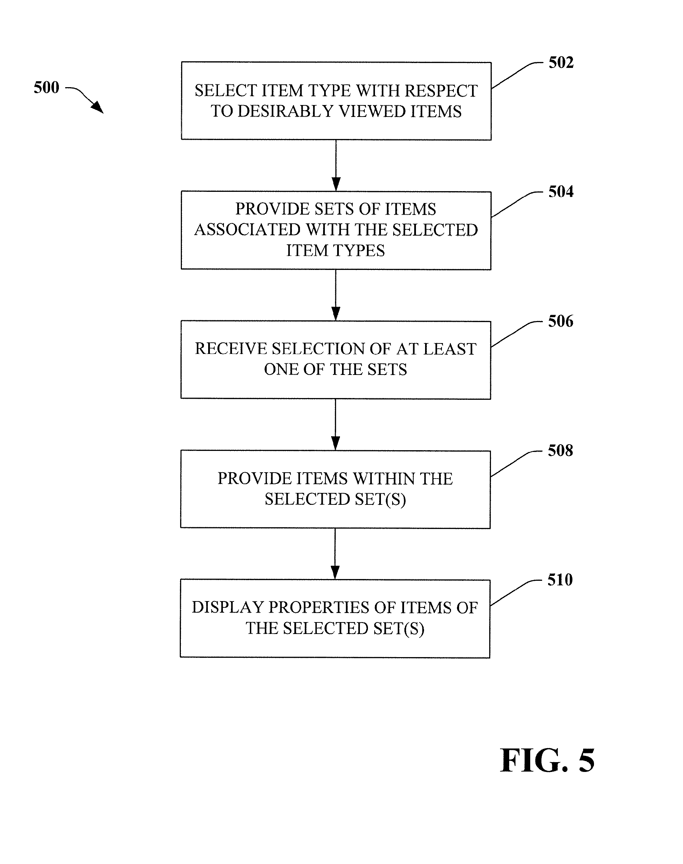

Referring to Figs. 5-9, methodologies in accordance with various aspects of the claimed subject matter are illustrated. While, for purposes of simplicity of explanation, the methodologies are shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

Turning solely to Fig. 5, a method 500 for providing a user with a desirably viewed set is illustrated. At 502, an item type with respect to desirably viewed items is selected. For instance, a graphical user interface can be provided to a user, wherein disparate types are provided for user-selection. Therefore, if a user wishes to view a set that includes email items, the user can indicate as much through the graphical user interface. At 504, sets of items associated with the selected items type(s) are provided to the user, for example, by way of the graphical user interface. At 506, a selection of at least one of the provided sets is received. This selection can be delivered and received by keystrokes, a pointing and clicking mechanism, pressure applied to a pressure sensitive screen, voice recognition techniques, *etc*. At 508, items within the selected set(s) are displayed to the user, and at 510, properties associated with the displayed items are also provided to the user. Thus, if the set includes email items, properties such as time of receipt, identity of sender, subject line content, and the like can be provided to the user at 510.

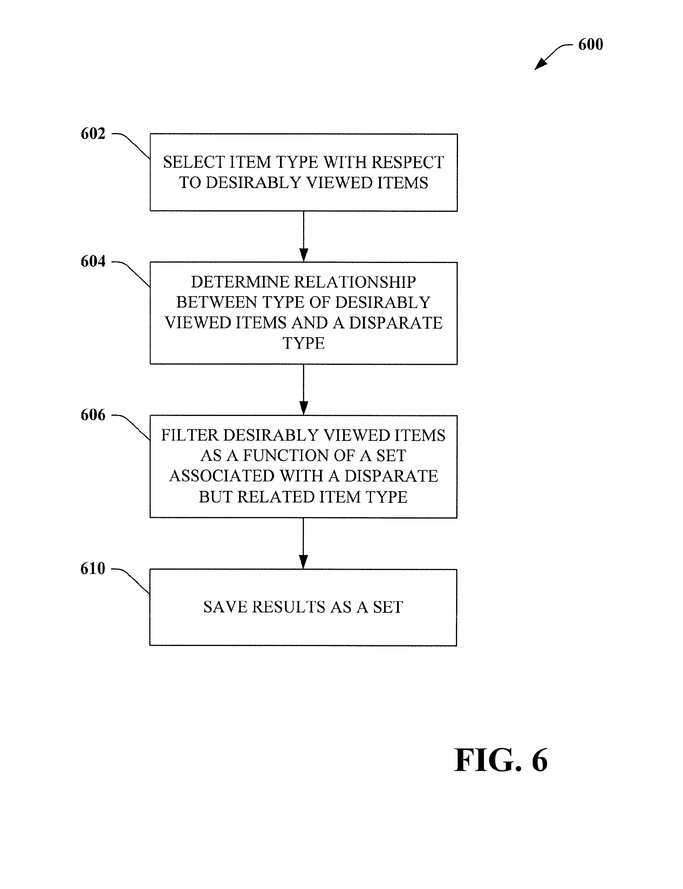

Now referring to Fig. 6, a methodology 600 for creating a set of items of one type by utilizing a set of items of a disparate but related type is illustrated. At 602, a desired item type is selected. For instance, the item type is related to desirably viewed items. Specifically, a selection of an email type enables a user to view a plurality of email items. At 604, a relationship between the type of item desirably viewed and a disparate type selected by a user is determined. For example, an item of type "contact" can be related to an item of type "email", as an individual represented by a "contact" item can be a sender of an "email" item. Similarly, an individual represented by a "contact" item can be an individual within an "image" item. At 606, the items selected at 602 are filtered as a function of a set that is associated with a disparate but related item type. Continuing with an above example, the user may wish to filter items of type "email" by using a set of items of type "image." For instance, items of type "email" that are from individuals within one or more selected items of type "image" can be grouped. At 608, the results of the filtering are saved as a set, wherein the set can be a static set or a dynamic set.

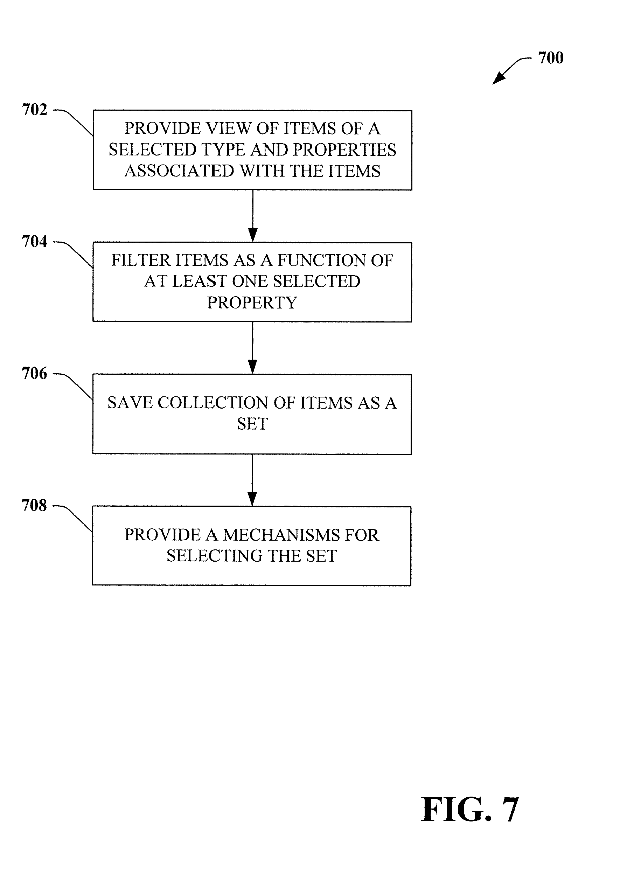

Turning to Fig. 7, a methodology 700 for creating a set and displaying the set to a user is illustrated. At 702, a view that includes items of a selected type and properties associated with such items is provided to a user. Thus, if the items viewed are of type "image", then properties associated with the image, such as creator of the image, content of the image (e.g., individuals within the image), name of the image, time of creation of the image, *etc.* can be provided to the user. At 704, items can be filtered as a function of at least one selected property. Continuing with the above, the user may wish to create a set of "image" items that were created within a specified time range and include specified content (e.g., particular individuals). At 706, a result of the filtering (e.g., a collection of items) is saved as a set, wherein the set can be a dynamic set or a static set as described above. At 708, a mechanism is provided that allows a user to later select the created set for viewing and/or for utilizing in connection with creating another set.

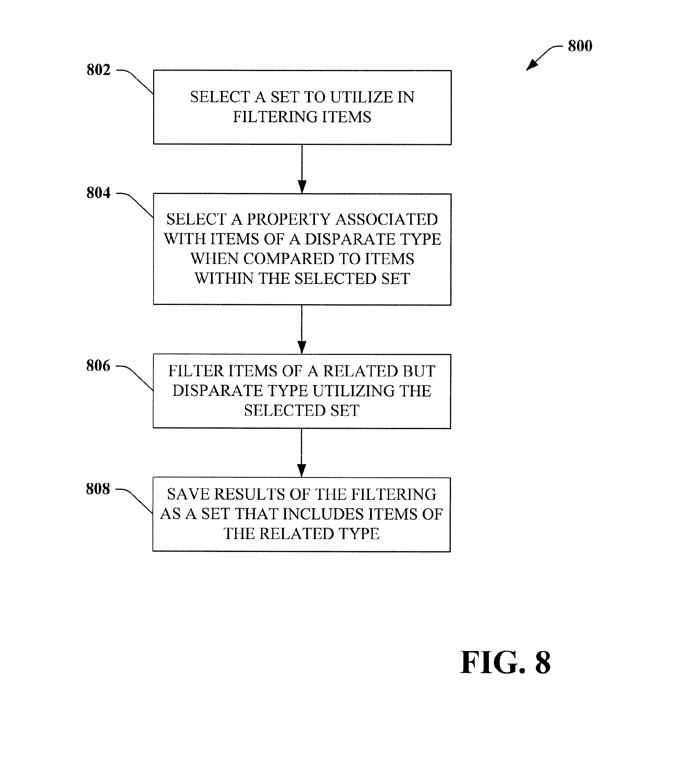

Turning now to Fig. 8, a method 800 for generating a set by way of utilizing a disparate set to filter items is illustrated. At 802, a set that is desirably utilized in connection with making a separate set is selected. For instance, the selected set can be a collection of "image" type items that are created by a particular person. At 804, a property associated with items of a disparate type when compared to items within the chosen set is selected. For example, a property associated with items of type "contact" can be identities of contacts within an email application, instant messaging application, address book, *etc.* The identity property is related to individuals who generated the pictures. At 806, the items of a disparate but related type are filtered by way of the selected set. Continuing with the above example, the set of images can be utilized to filter against the set of contacts, thereby creating a set of contacts that have created image files. At 808, results of the filtering are saved as a set, wherein the set includes the items of the disparate related type from the set utilized to filter against the items.

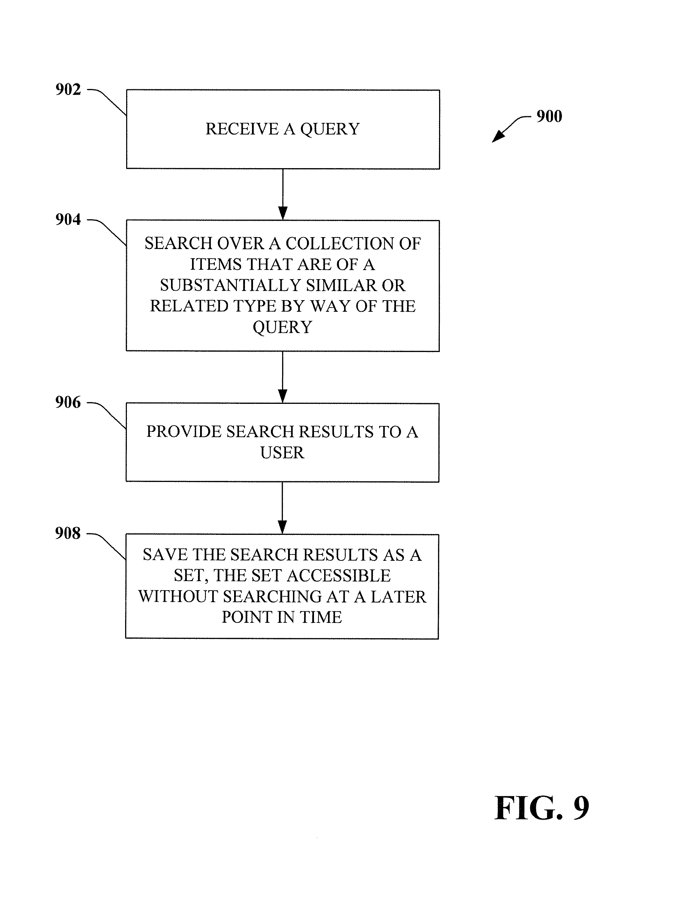

Turning now to Fig. 9, a methodology that can be employed in connection with creating one or more sets is illustrated. At 902, a query is received, and at 904 a collection of items are searched over by way of the query. For instance, the items can be of a substantially similar type (e.g., email messages) or items of disparate but somehow related types (e.g., email messages, contacts, and photograph items). At 906, results of the search can be provided to a user, for example, by way of a graphical user interface. At 908, the search results can be saved as a set, wherein a user can access the set without having to re-execute the query. Furthermore, the set can be saved as a static set or a dynamic set.

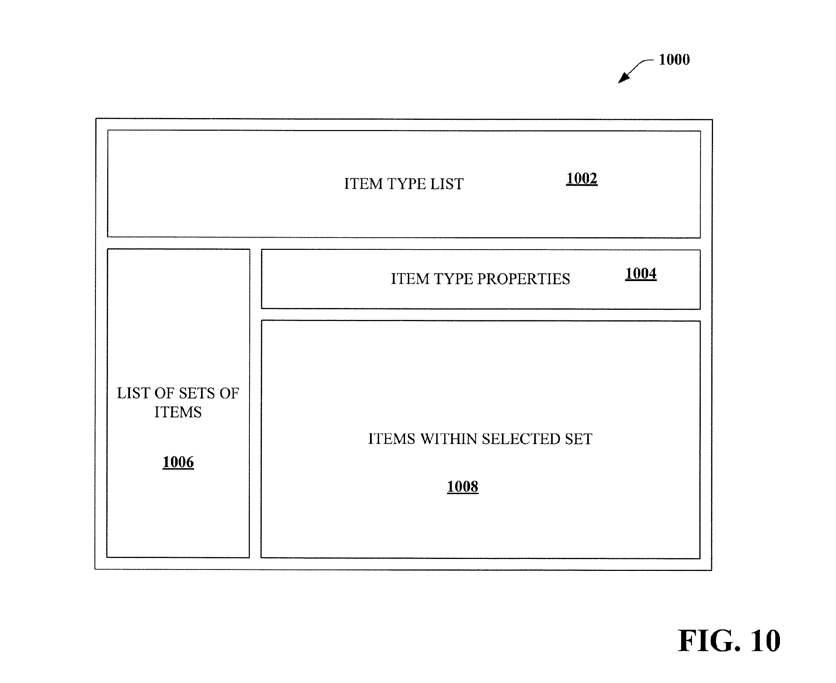

Now referring to Fig. 10, an exemplary user interface 1000 that can be employed to create or compose one or more sets is illustrated. The user interface 1000 includes an item type list 1002, wherein multiple items types are listed that can be selected by a user. Furthermore, more than one item type can selected, for example, by way of check boxes. The item type list 1002 can include items of type contact, email message, photograph, movie, music, web page, or any other suitable type of item. Upon selection of one or more types of items, a field 1004 can display properties associated with the items. For example, time of creation, time of access, creator of the item, name of the item, and any other suitable property that can be associated with an item can be displayed within the field 1004.

The user interface 1000 can further include a field 1006 that displays available sets of items associated with the item type(s) selected from the item type list 1002. Thus, sets of email items, sets of photograph items, or any other suitable sets of items can be displayed upon selection of an item type from the item type list. Further, sets that include items of multiple types can be displayed upon selection of any type of item that exists within the set or, in a disparate aspect, sets that include items of multiple types can be displayed upon selection of each type of item within the sets from the item type list 1002. Upon selection of a set of items from the list of sets, a display field 1008 can provide a user with items within the selected set of items. The user interface 1000 thus provides a user with an intuitive manner for quickly finding desirable sets of items and viewing items within selected sets.

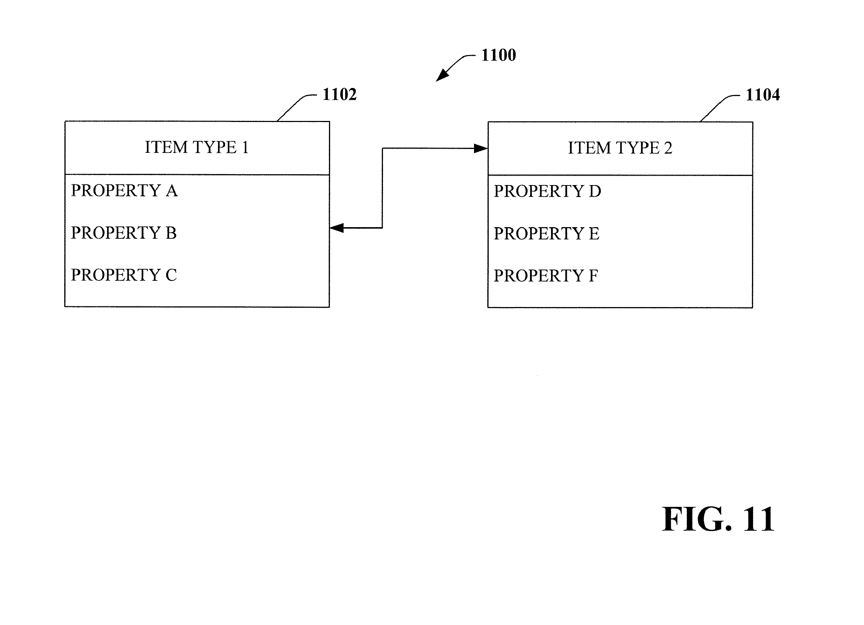

Now turning to Fig. 11, an exemplary relationship 1100 between two disparate types of items is illustrated. A first item 1102 associated with a first item type can include three disparate properties: property A, property B, and property C. A second item 1104 associated with a second type can include three distinct properties: property D, property E, and property F. For instance, the item 1102 can be a photograph item, and property A can be creator of the photograph, property B can be time the photograph was taken, and property C can be identity of a camera that created the photograph. The second item 1104 can be a contact item from an instant messenger application, where property D is an address for the contact, property E is a home phone number of the contact, and property F is a work phone number for the contact. It can be discerned that the first item 1102 can be related to the second item 1104 through property A - thus, for instance, a user can create a set by way of requesting contacts that have created photograph items. In another example, a set of photograph items created by contacts within the instant messenger application can be generated. To facilitate location and identification of properties, a database can be maintained that includes items and properties associated with the items.

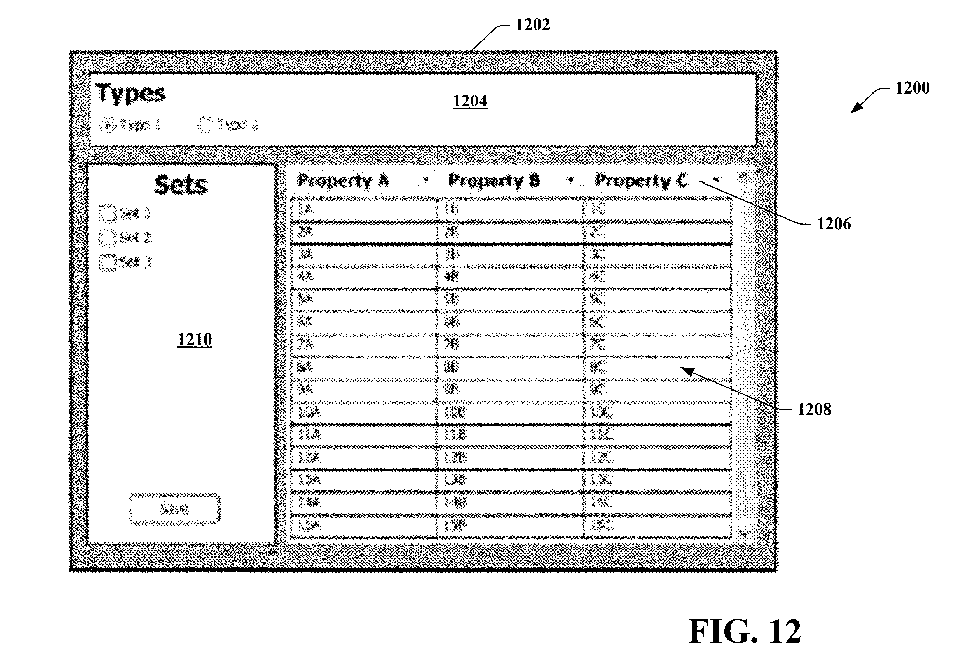

Now referring to Fig. 12, a screenshot 1200 of a user interface 1202 that can be utilized to view and create sets is illustrated. The user interface 1202 includes a types field 1204, wherein two disparate types are available for selection (e.g., email and photographs). Selection of the available types is facilitated through radio buttons; however, it is understood that check boxes and other suitable mechanisms for selecting item types are also contemplated by the inventors, and such mechanisms are intended to fall under the scope of the hereto-appended claims. Upon selection of a type, a properties field 1206 can illustrate properties associated with the type. For example, if the selected item type is an email message type, then properties can include sender, time of receipt, subject line text, and the like. A field 1208 can be utilized to display items of the selected type and properties associated therewith. Furthermore, a sets field 1210 can display available sets associated with the selected item type, wherein the sets are selectable by way of radio button, check box, or the like. While not shown, if one of the sets is selected, items associated with such set can be displayed in the field 1208.

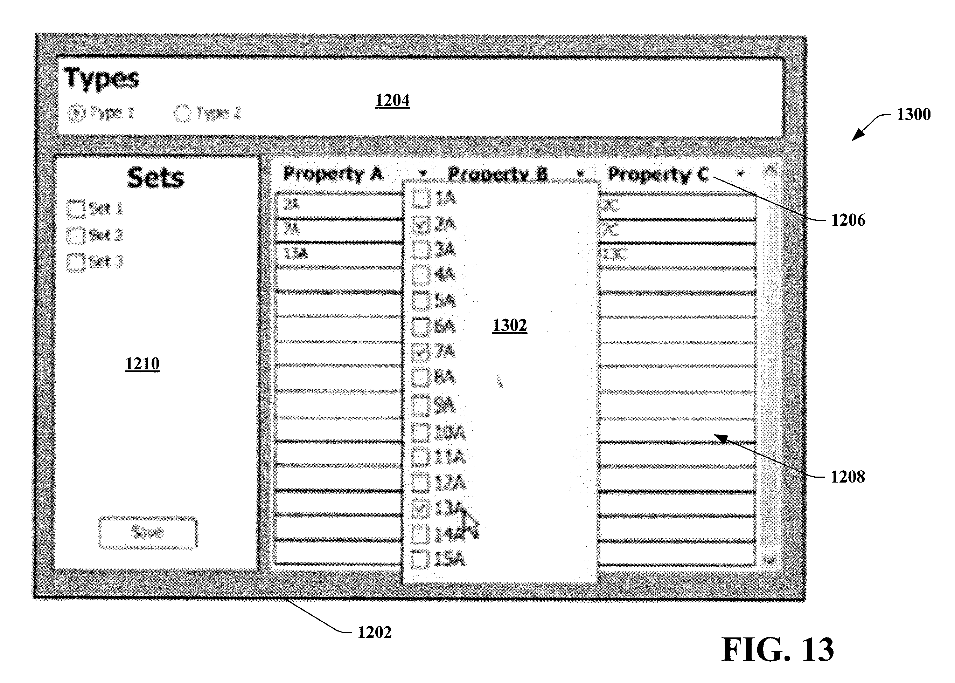

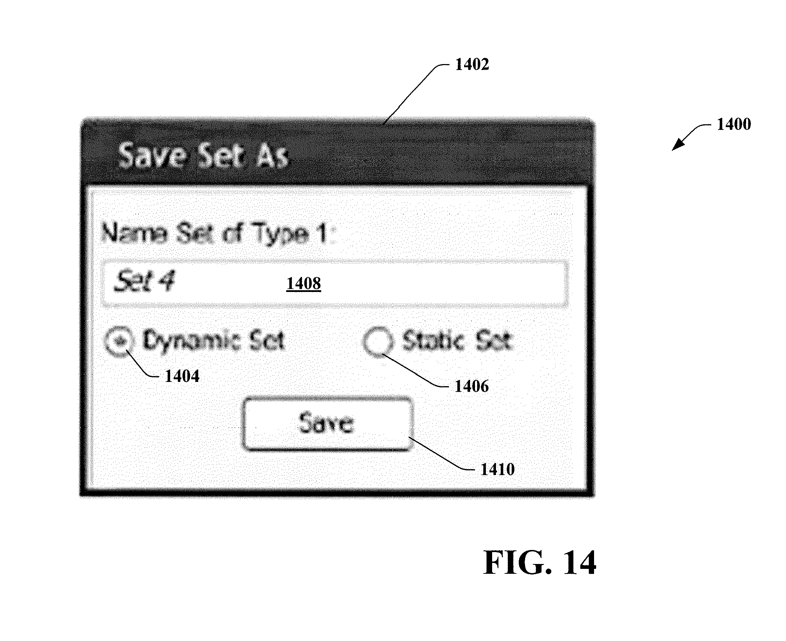

Turning now to Fig. 13, a screenshot 1300 of the user interface 1202 is provided, where disparate items are selected through selection of particular property values in order to create a set. For instance, a pull-down menu 1302 can be enabled upon selection of a tab associated with a property A. A user can then select individual property values by way of check boxes. For example, type 1 items can be email items, and property A can relate to subject line text. Thus, by selecting individual members of property A, a set of email messages that includes common text within a subject line can be quickly and easily created. Referring briefly to Fig. 14, a screenshot 1400 of a user interface 1402 that enables saving a set is illustrated. A user can determine whether the set is to be saved as a dynamic set or a static set by way of radio buttons 1404 and 1406 (or other selection mechanisms), where a dynamic set automatically updates the set with items that correspond to the selected property or properties upon which the set is based, and a static set does not update automatically. Thus, continuing with the above example, as the set is shown as being saved as a dynamic set, any email items that include the selected text will automatically be entered into the set. Upon entering a desirable name into a field 1408, a button 1410 can be depressed to save the set.

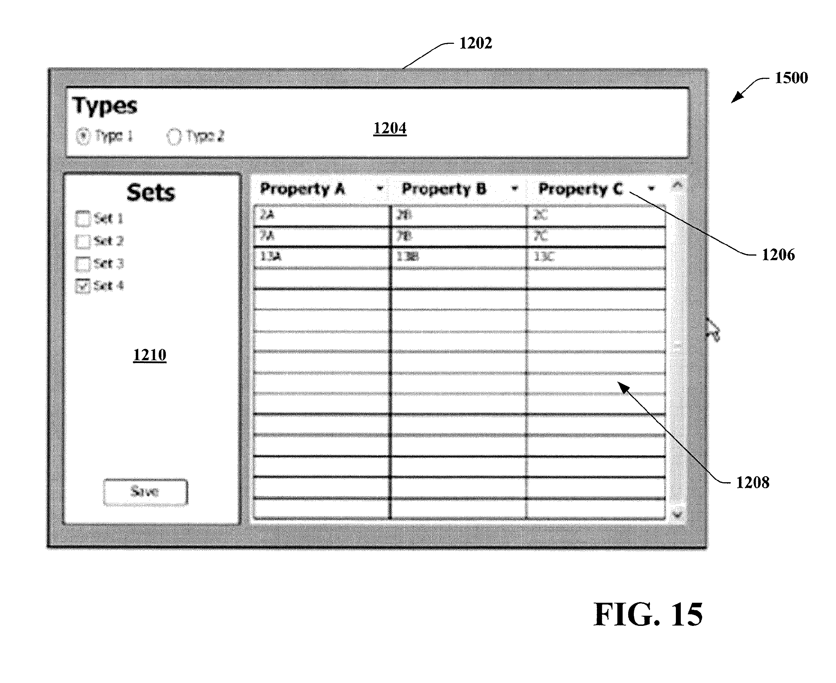

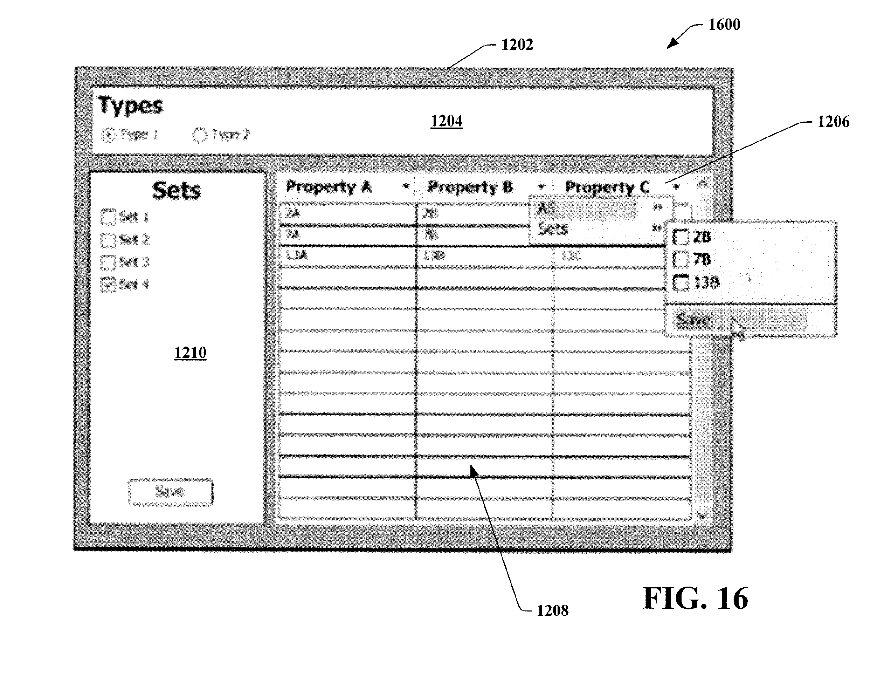

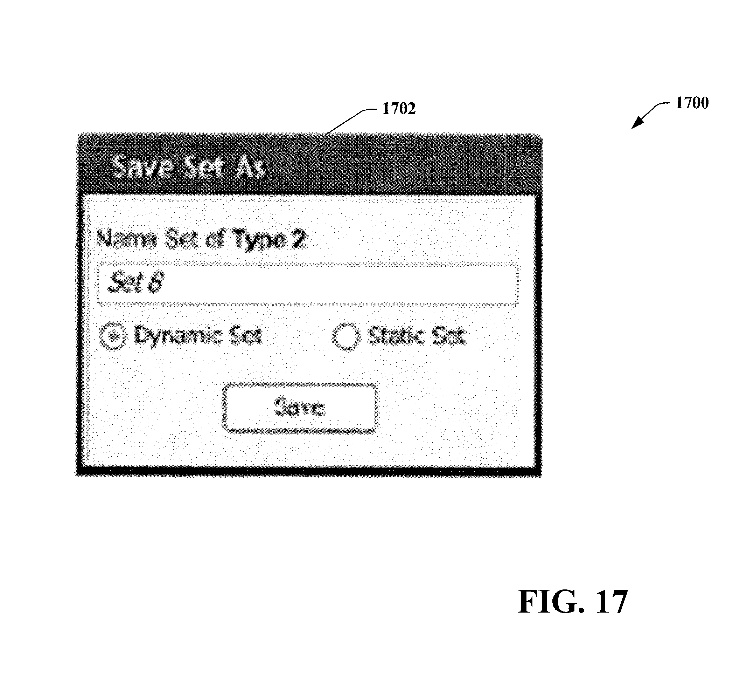

Now referring to Fig. 15, a screenshot 1500 of the user interface 1202 is illustrated, where set 4 has been selected by way of a check box. Upon selection of set 4, items within the set can be displayed within the field 1208. Turning now to Fig. 16, a screenshot 1600 of the user interface 1202 is provided, where the previously created set (set 4) is utilized to filter and create a separate set. For instance, property B can be inherently related to an item of a disparate type, as was described above with respect to Fig. 11. In a more detailed example, property B can be a sender of a message, which relates to identity of instant messenger contacts. By selecting property B and individual members of the property within the set, a set of items of a disparate type can be created. Continuing with the above example, a set of contacts that provided email messages with subject line text utilized to create set 4 can be generated. Turning briefly to Fig. 17, a screenshot 1700 illustrating a user interface 1702 that can be employed in connection with saving a set as a set of a different type is illustrated. Thus, the created set (set 8) can be saved as a set of contact items.

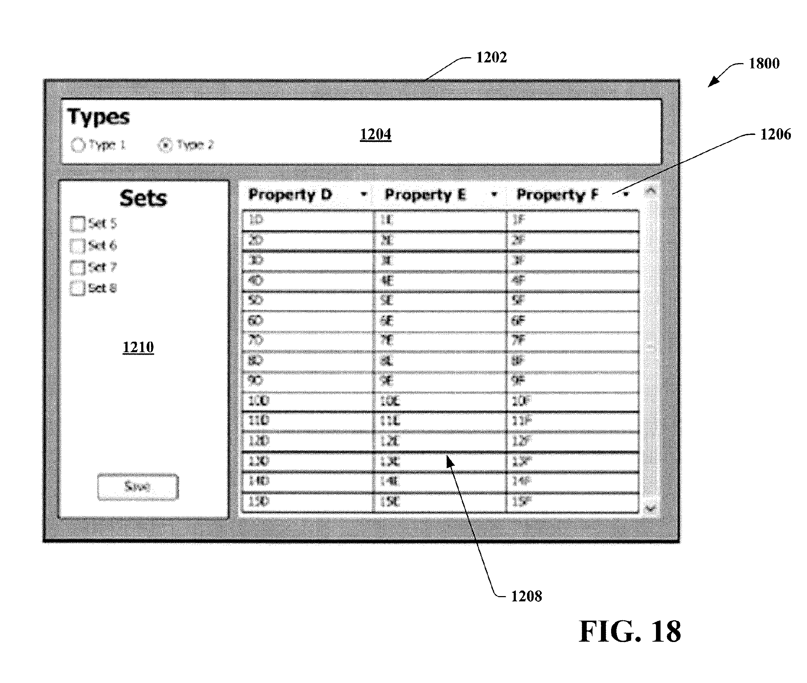

Now referring to Fig. 18, an exemplary screenshot 1800 of the user interface 1202 is provided, wherein a user has requested to view items of type 2. Set 8, which was previously generated by manners described above with respect to Fig. 17, is displayed in the sets field 1210 when the user requests viewing of items of type 2. The sets field 1210 also displays disparate sets that are associated with the selected type, and the field 1208 can be updated with items associated with the selected type. Furthermore, the properties field has been updated to display properties associated with the selected type (properties D, E, and F).

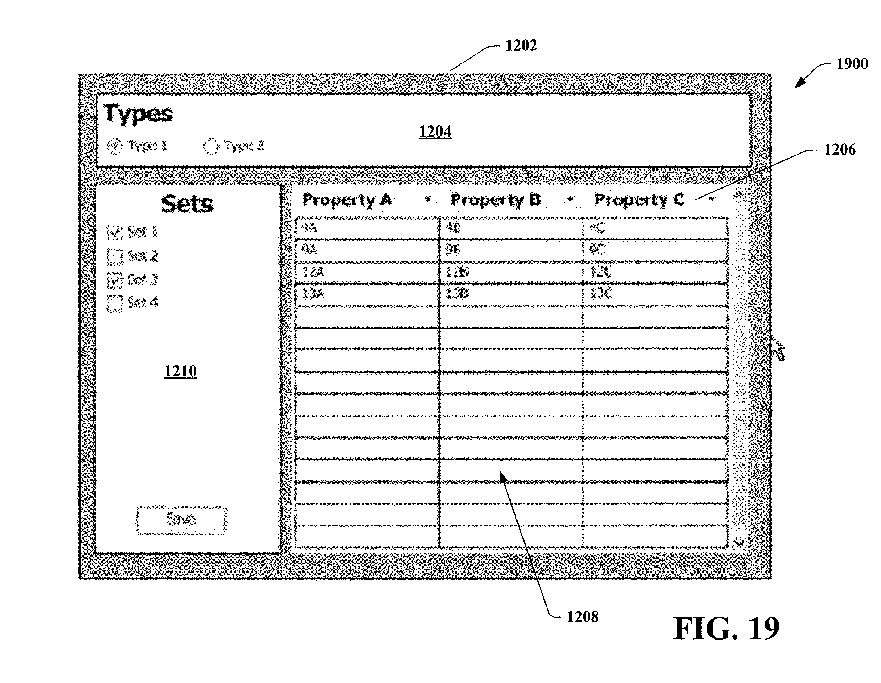

Turning now to Fig. 19, a screenshot 1900 of the user interface 1202 is provided, where sets 1 and 3 within the sets field 1206 have been selected, and items associated with the selected sets have been provided in the field 1208. In one example, only items within both sets (sets 1 and 3) are provided to a user. In a disparate aspect, items in either the first or third set can be simultaneously provided. Thus, a user can quickly and efficiently view items within disparate sets through selection of multiple sets. Further, as described above, multiple selected sets can be utilized as filters for disparate sets of items of the same type or items of disparate types.

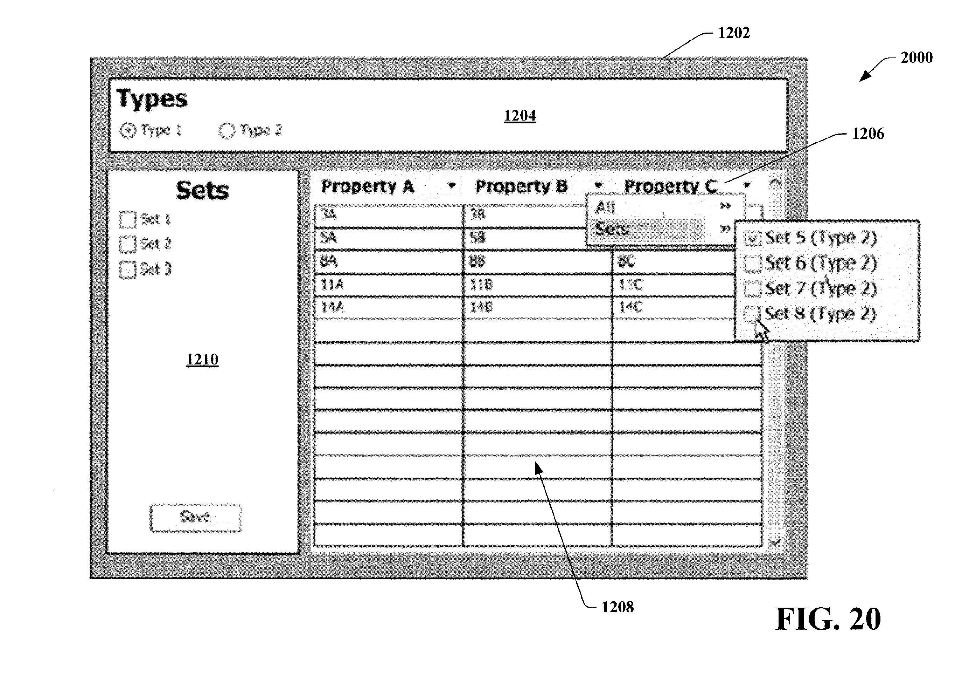

Now referring to Fig. 20, a screenshot 2000 of the user interface 1202 is illustrated. The screenshot 2000 is intended to exhibit a manner in which a first set of items of a first type can be utilized in connection with creation of a second set of items of a second type. Such creation of a set through filtering by a set of a different type is possible so long as the type of the first set is related to the type of the second set. For instance, a set of Contacts from an email application and/or Instant Messaging application (of type 2) can be utilized to filter email (of type 1) to create a set of emails relating to the Contacts. In a more particular example, the set of Contacts can be a set of customers, and such set can be utilized to create a set of emails from such customers.

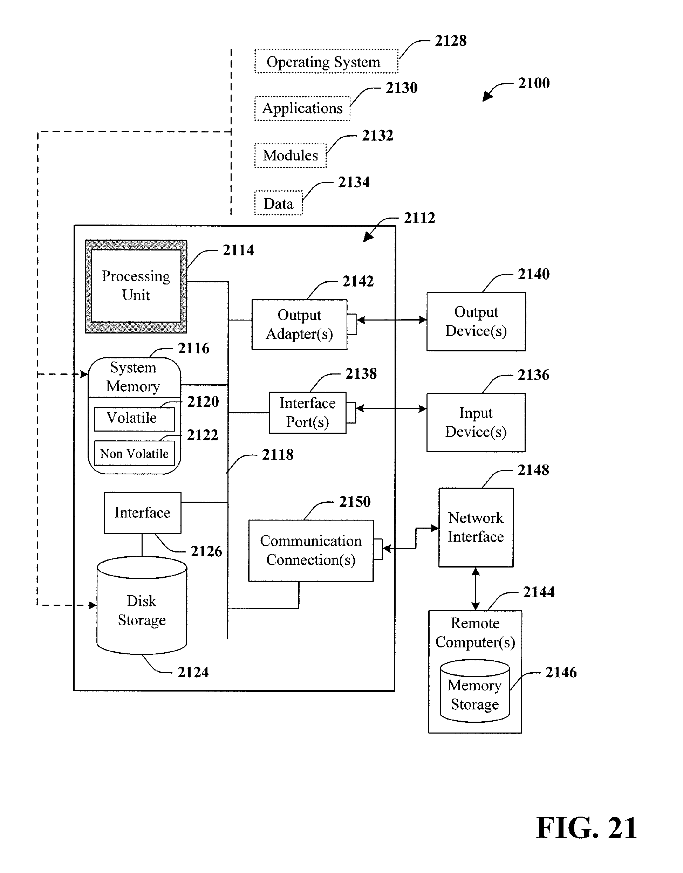

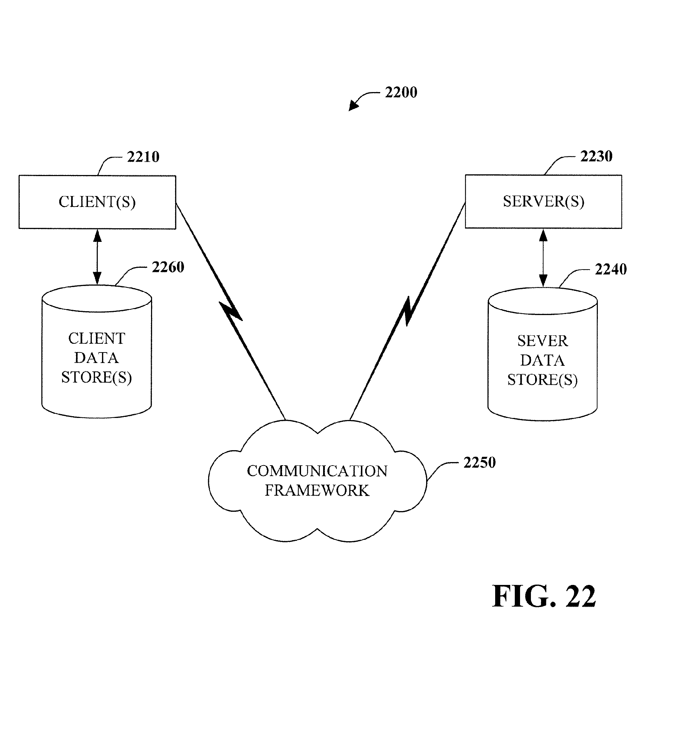

In order to provide a context for the various aspects of the claimed subject matter, Figs. 21 and 22 as well as the following discussion are intended to provide a brief, general description of a suitable computing environment in which the various aspects of the present invention may be implemented. While the invention has been described above in the general context of computer-executable instructions of a computer program that runs on a computer and/or computers, those skilled in the art will recognize that the invention also may be implemented in combination with other program modules. Generally, program modules include routines, programs, components, data structures, *etc*. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices, microprocessor-based or programmable consumer electronics, and the like. The illustrated aspects of the invention may also be practiced in distributed computing environments where task are performed by remote processing devices that are linked through a communications network. However, some, if not all aspects of the invention can be practiced on stand-alone computers. In a distributed computing environment, program modules may be located in both local and remote memory storage devices.

With reference to Fig. 21, an exemplary environment 2100 for implementing various aspects of the invention includes a computer 2112. The computer 2112 includes a processing unit 2114, a system memory 2116, and a system bus 2118. The system bus 2118 couples system components including, but not limited to, the system memory 2116 to the processing unit 2114. The processing unit 2114 can be any of various available processors. Dual microprocessors and other multiprocessor architectures also can be employed as the processing unit 2114.

The system bus 2118 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 2116 includes volatile memory 2120 and nonvolatile memory 2122. The basic input/output system (BIOS), containing the basic routines to transfer information between elements within the computer 2112, such as during start-up, is stored in nonvolatile memory 2122. By way of illustration, and not limitation, nonvolatile memory 2122 can include read only memory (ROM), programmable ROM (PROM), electrically programmable ROM (EPROM), electrically erasable ROM (EEPROM), or flash memory. Volatile memory 2120 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 2112 also includes removable/non-removable, volatile/non-volatile computer storage media. Fig. 21 illustrates, for example disk storage 2124. Disk storage 4124 includes, but is not limited to, devices like a magnetic disk drive, floppy disk drive, tape drive, Jaz drive, Zip drive, LS-100 drive, flash memory card, or memory stick. In addition, disk storage 2124 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 2124 to the system bus 2118, a removable or non-removable interface is typically used such as interface 2126.

It is to be appreciated that Fig 21 describes software that acts as an intermediary between users and the basic computer resources described in suitable operating environment 2110. Such software includes an operating system 2128. Operating system 2128, which can be stored on disk storage 2124, acts to control and allocate resources of the computer system 2112. System applications 2130 take advantage of the management of resources by operating system 2128 through program modules 2132 and program data 2134 stored either in system memory 2116 or on disk storage 2124. It is to be appreciated that the present invention can be implemented with various operating systems or combinations of operating systems.

A user enters commands or information into the computer 2112 through input device(s) 2136. Input devices 2136 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 2114 through the system bus 2118 *via* interface port(s) 2138. Interface port(s) 2138 include, for example, a serial port, a parallel port, a game port, and a universal serial bus (USB). Output device(s) 2140 use some of the same type of ports as input device(s) 2136. Thus, for example, a USB port may be used to provide input to computer 2112 and to output information from computer 2112 to an output device 2140. Output adapter 2142 is provided to illustrate that there are some output devices 2140 like displays (e.g., flat panel and CRT), speakers, and printers, among other output devices 2140 that require special adapters. The output adapters 2142 include, by way of illustration and not limitation, video and sound cards that provide a means of connection between the output device 2140 and the system bus 2118. It should be noted that other devices and/or systems of devices provide both input and output capabilities such as remote computer(s) 2144.

Computer 2112 can operate in a networked environment using logical connections to one or more remote computers, such as remote computer(s) 2144. The remote computer(s) 2144 can be a personal computer, a server, a router, a network PC, a workstation, a microprocessor based appliance, a peer device or other common network node and the like, and typically includes many or all of the elements described relative to computer 2112. For purposes of brevity, only a memory storage device 2146 is illustrated with remote computer(s) 2144. Remote computer(s) 2144 is logically connected to computer 2112 through a network interface 2148 and then physically connected *via* communication connection 2150. Network interface 2148 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit-switching networks like Integrated Services Digital Networks (ISDN) and variations thereon, packet switching networks, and Digital Subscriber Lines (DSL).

Communication connection(s) 2150 refers to the hardware/software employed to connect the network interface 2148 to the bus 2118. While communication connection 2150 is shown for illustrative clarity inside computer 2112, it can also be external to computer 2112. The hardware/software necessary for connection to the network interface 2148 includes, for exemplary purposes only, internal and external technologies such as, modems including regular telephone grade modems, cable modems, power modems and DSL modems, ISDN adapters, and Ethernet cards.

Fig. 22 is a schematic block diagram of a sample-computing environment 2200 with which the present invention can interact. The system 2200 includes one or more client(s) 2210. The client(s) 2210 can be hardware and/or software (e.g., threads, processes, computing devices). The system 2200 also includes one or more server(s) 2230. The server(s) 2230 can also be hardware and/or software (e.g., threads, processes, computing devices). The server(s) 2230 can house threads to perform transformations by employing the present invention, for example. One possible communication between a client 2210 and a server 2230 may be in the form of a data packet transmitted between two or more computer processes. The system 2200 includes a communication framework 2250 that can be employed to facilitate communications between the client(s) 2210 and the server(s) 2230. The client(s) 2210 are operatively connected to one or more client data store(s) 2260 that can be employed to store information local to the client(s) 2210. Similarly, the server(s) 2230 are operatively connected to one or more server data store(s) 2240 that can be employed to store information local to the servers 2230.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the terms "includes," "has," and "having" are used in either the detailed description or the claims, such term is intended to be inclusive in a manner similar to the term "comprising" as "comprising" is interpreted when employed as a transitional word in a claim.

## Claims

1. A data organization system, comprising:
an interface component that receives input that relates to properties associated with a first item type; and
a set generator component that filters a collection of items of the first item type as a function of select properties associated with the input and creates and stores a first filtered set of items of the first item type.

2. The system of claim 1, the first filtered set of items stored as one of a dynamic set and a static set.

3. The system of claim 1, the first filtered set of items relates to items within an email application.

4. The system of claim 1, the set generator component receives a second filtered set of items that are associated with a second item type that are disparate from but related to the first item type and filters items of the first item type through utilization of the second filtered set of items in connection with creating the first filtered set of items.

5. The system of claim 4, the set generator component creates the first filtered set of items by filtering by way of a property associated with the second filtered set of items that is related to a property associated with the first item type.

6. The system of claim 1, further comprising a display component that displays a plurality of filtered sets of items in a hierarchical manner.

7. The system of claim 6, further comprising a machine-learning component that generates inferences in connection with displaying the plurality of filtered sets of items and items therein.

8. The system of claim 1, the first item type relates to one of email, contacts, images, web pages, video, and audio.

9. The system of claim 1, the interface component utilized to select one or more of the properties, the selected properties employed to filter items and create the first filtered set of items.

10. A computer-readable medium having stored thereon the components of claim 1.

11. A mobile device having stored thereon the components of claim 1.

12. The system of claim 1, further comprising a search component that receives a query that relates to the properties and searches over the collection of items, results associated with the search are provided to the set generator component.

13. The system of claim 12, the search component is a search engine.

14. The system of claim 1, a graphical user interface is employed to facilitate selection of a subset of properties associated with the first item type.

15. The system of claim 14, the graphical user interface comprises:
a first field that displays a list of selectable item types;
a second field that displays properties associated with a selected item type;
a third field that displays items associated with the selected item type; and
a fourth field that displays a list of sets associated with the selected item type.

16. A method for creating and saving sets of items, comprising:
searching for one or more items based upon one or more properties associated with a first item type of the one or more items; and
saving results of the search as a first filtered set of items.

17. The method of claim 16, further comprising saving the first filtered set of items as a dynamic set.

18. The method of claim 17, further comprising automatically directing an item to the first filtered set, the item associated with the one or more properties.

19. The method of claim 16, further comprising searching for the one or more items as a function of one or more properties associated with items in a second filtered set of items, the items in the second filtered set of items associated with a second item type that is disparate from but related to the first item type.

20. A system that facilitates data organization, comprising:
means for creating a first set of items; and
means for utilizing the first set of items to create a second set of items.
